# EUROPEAN PATENT APPLICATION

(11) **EP 4 145 283 A1**
(43) Date of publication of application: **08.03.2023**
(21) Application number: 21797513.5
(22) Date of filing: 23.03.2021
(51) Int. Cl.: G06F 9/48

(54) **TASK ALLOCATION METHOD AND APPARATUS, ELECTRONIC DEVICE, AND COMPUTER READABLE STORAGE MEDIUM**

(30) Priority: 29.04.2020 CN 202010357660
(71) Applicant: Stream Computing Inc, Beijing 100012 (CN)
(72) Inventor: WANG, Weiwei, Beijing 100012 (CN); LUO, Fei, Beijing 100012 (CN)
(74) Representative: Huang, Liwei
(86) International application number: PCT/CN2021/082225
(87) International publication number: WO 2021/218492

(57) **Abstract**

Disclosed is a task allocation method, apparatus, electronic device, and computer-readable storage medium. The task allocation method includes: in response to receiving a synchronization signal, executing, by the master processing core, a task update instruction to obtain a to-be-executed task segment; receiving, by a processing core for executing the task, the to-be-executed task segment, wherein the processing core for executing the task includes the master processing core and/or the slave processing core; executing, by the processing core for executing the task, the to-be-executed task segment; and in response to completion of execution of the to-be-executed task segment, sending, by the processing core for executing the task, a synchronization request signal, wherein the synchronization request signal is configured to trigger generation of the synchronization signal. With the above method, the master processing core allocates the task segments to be executed by the processing cores according to the synchronization signal, solving the technical problems of inflexible task allocation and complicated control of the processing cores in the prior art.

## Description

This application claims priority to Chinese Patent Application No. 202010357660.0, entitled "Task Allocation Method, Apparatus, Electronic Device, and Computer-Readable Storage Medium", filed on April 29, 2020, the entire contents of which are incorporated herein by reference for all purposes.

### TECHNICAL FIELD

The present disclosure relates to the field of processors, and in particular, to a task allocation method, apparatus, electronic device, and computer-readable storage medium.

### BACKGROUND

With the development of science and technology, human society is rapidly entering an era of intelligence. The important feature of the era of intelligence is that people may acquire more and more types of data, the amount of data that people may acquire is becoming larger and larger, and the demand for the data processing speed is becoming higher and higher. Chips are the cornerstone of task allocation, which essentially determine the ability to process data. From the perspective of application fields, the chips are mainly developed in two routes. One is general-purpose chips, for example, central processing units (CPU) and the like, which can provide great flexibility but have low effective computing power when processing algorithms in a specific field; the other is special-purpose chips, for example, tensor processing units (TPU) and the like, which have high effective computing power in certain specific fields but are poor in processing capacity or even have no processing capacity in flexible and universal fields. Due to various data types and numerous data volumes in the era of intelligence, the chips are required to not only process changing algorithms in different fields with extremely high flexibility, but also rapidly process a great number of dramatically increasing data volumes with extremely strong processing capacities.

In neural network computing, multi-core or many-core chips are often used. How to efficiently exploit the computing power of the many processing cores is the key to determining the performance of the entire chip. The utilization of computing power of each processing core depends on a variety of factors, such as scheduling and allocation of tasks, chip architecture, processing core structure, and processing core circuitry. Among them, the scheduling and allocation of tasks is a very critical factor. If the scheduling and allocation of tasks is reasonable, the effective computing power of each processing core can be fully utilized.

In the prior art, the following two schemes are generally used to schedule tasks for processing cores.

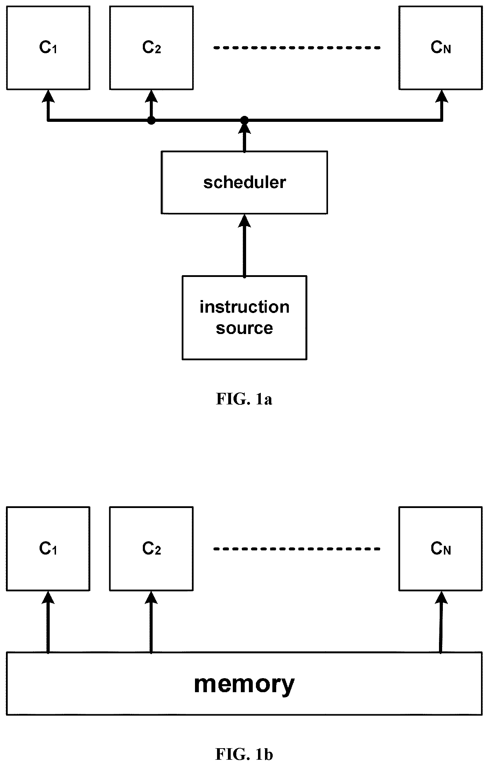

FIG. 1a illustrates a scheme for task allocation using a scheduler. In this scheme, the scheduler receives the instruction from the instruction source, and then transfers the instruction to each processing core according to a certain strategy, such as in sequential order. Each processing core executes the same instruction, but processes different data. Each processing core may have a relatively simple structure, such as SIMD (Single Instruction Multiple Data) that shares control circuits and registers, or a more complex structure with a certain degree of autonomy, such as SIMT (Single Instruction Multiple Threads) that has an independent control circuit, registers, etc. However, in this scheme, the scheduler can only passively receive instructions from the external instruction source, and then assign them to each processing core, which has a single function and lacks flexibility. Whether it is a SIMD structure or a SIMT structure, each processing core can only execute the same instructions, the degree of freedom of each processing core is low, and the control is simple.

FIG. 1b illustrates a scheme where the processing cores execute tasks independently. In this scheme, each processing core can independently read instructions from the memory and perform operations; each processing core has a complete control circuit, a register group and other circuits. However, in this scheme, it is difficult for each processing core to cooperate with each other to efficiently accomplish a complete task; the circuit control is complex, each core is almost a complete CPU, the design is difficult, the power consumption is high and the area is large; multiple processing cores may frequently access the instruction storage area, leading to a decrease in storage access efficiency, which in turn affects the performance of the chip's computing power.

### SUMMARY

The summary is provided to introduce concepts in a brief form, which will be described in detail in the Detailed Description that follows. The summary is not intended to identify key features or essential features of the claimed technical solution, nor is it intended to be used to limit the scope of the claimed technical solution.

In order to solve the technical problems of inflexible task allocation and complex control of processing cores in the prior art, embodiments of the present disclosure provide the following technical solutions.

In a first aspect, the embodiments of the present disclosure provide a task allocation method, for use in a chip, the chip including a master processing core and at least one slave processing core, the method including:
in response to receiving a synchronization signal, executing, by the master processing core, a task update instruction to obtain a to-be-executed task segment, wherein the to-be-executed task segment is a part of a task;
receiving, by a processing core for executing the task, the to-be-executed task segment, wherein the processing core for executing the task includes the master processing core and/or the slave processing core;
executing, by the processing core for executing the task, the to-be-executed task segment; and
in response to completion of execution of the to-be-executed task segment, sending, by the processing core for executing the task, a synchronization request signal, wherein the synchronization request signal is configured to trigger generation of the synchronization signal.

Further, executing, by the master processing core, the task update instruction to obtain the to-be-executed task segment, includes:
executing, by the master processing core, the task update instruction to send a task segment acquisition instruction to a memory manager; and
executing, by the memory manager, the task segment acquisition instruction to read the to-be-executed task segment from an external memory and send the to-be-executed task segment to the master processing core and the slave processing core.

Further, the method further includes:
sending, by the processing core for executing the task, a data acquisition instruction according to the to-be-executed task segment received; and
receiving, by the processing core for executing the task, corresponding input data according to the data acquisition instruction.

Further, receiving, by the processing core for executing the task, the corresponding input data according to the data acquisition instruction, includes:
using an identification of the processing core for executing the task as a parameter of the data acquisition instruction to obtain the input data of the processing core for executing the task.

Further, the synchronization request signal being configured to trigger the generation of the synchronization signal, includes:
in response to the synchronization request signals being sent by all processing cores for executing the task, triggering the generation of the synchronization signal.

Further, in response to receiving the synchronization signal, executing, by the master processing core, the task update instruction to obtain the to-be-executed task segment, includes:
in response to receiving the synchronization signal, using, by the master processing core, number of the synchronization signals received as a parameter for executing the task update instruction to generate a task segment acquisition instruction; and
sending, by the master processing core, the task segment acquisition instruction to acquire the corresponding to-be-executed task segment.

Further, after receiving the synchronization signal, the method further includes:
starting, by the master processing core, a synchronization counter to record number of the synchronization signals received by the master processing core.

In a second aspect, the embodiments of the present disclosure provide a chip, including:
a master processing core, at least one slave processing core, and a memory manager;
wherein, the master processing core is configured to, in response to a received synchronization signal, execute a task update instruction to obtain a to-be-executed task segment, and the to-be-executed task segment is a part of a task;
the memory manager is configured to, based on the task update instruction, read the to-be-executed task segment corresponding to the task update instruction from an external memory and send the to-be-executed task segment to a processing core for the executing the task;
wherein the processing core for executing the task includes the master processing core and/or the slave processing core;
the processing core for executing the task is configured to receive the to-be-executed task segment;
the processing core for executing the task is configured to execute the to-be-executed task segment; and
in response to completion of execution of the to-be-executed task segment, the processing core for executing the task is configured to send a synchronization request signal, wherein the synchronization request signal is configured to trigger generation of the synchronization signal.

Further, the chip further includes:
a network on chip, connected to the master processing core, the slave processing core and the memory manager, and configured to transfer data among the master processing core, the slave processing core and the memory manager.

Further, the master processing core is configured to execute the task update instruction to send a task segment acquisition instruction to the memory manager; the memory manager is configured to execute the task segment acquisition instruction to read the to-be-executed task segment from the external memory and send it to the processing core for executing the task.

Further, the processing core for executing the task is further configured to send a data acquisition instruction according to the to-be-executed task segment received; and to receive corresponding input data according to the data acquisition instruction.

Further, the processing core for executing the task is configured to use an identification of the processing core for executing the task as a parameter of the data acquisition instruction, to obtain the corresponding input data of the processing core for executing the task.

Further, the synchronization request signal being configured to trigger the generation of the synchronization signal, includes:
in response to the synchronization request signals being sent by all processing cores for executing the task, the generation of the synchronization signal is triggered.

Further, the master processing core is configured to, in response to receiving the synchronization signal, use the number of the synchronization signals received as a parameter for executing the task update instruction to generate a task segment acquisition instruction; and send the task segment acquisition instruction to acquire the corresponding to-be-executed task segment.

Further, after receiving the synchronization signal, the master processing core is configured to start a synchronization counter to record the number of the synchronization signals received by the master processing core.

In a third aspect, the embodiments of the present disclosure provide an electronic device, including: a memory for storing computer-readable instructions; and one or more processors for executing the computer-readable instructions, which, upon execution, cause the processors to implement any one of the task allocation methods in the first aspect.

In a fourth aspect, the embodiments of the present disclosure provide a non-transitory computer-readable storage medium, the non-transitory computer-readable storage medium storing computer instructions for causing a computer to execute any one of the task allocation methods in the first aspect.

In a fifth aspect, the embodiments of the present disclosure provide a computer program product, including computer instructions, wherein, when the computer instructions are executed by a computing device, the computing device executes any one of the task allocation methods in the first aspect.

In a sixth aspect, the embodiments of the present disclosure provide a computing apparatus, including one or more chips of the second aspect.

The embodiments of the present disclosure provide a task allocation method, apparatus, electronic device and computer-readable storage medium. The task allocation method, for use in a chip, the chip including a master processing core and at least one slave processing core, the method including: in response to receiving a synchronization signal, executing, by the master processing core, a task update instruction to obtain a to-be-executed task segment, wherein the to-be-executed task segment is a part of a task; receiving, by a processing core for executing the task, the to-be-executed task segment, wherein the processing core for executing the task includes the master processing core and/or the slave processing core; executing, by the processing core for executing the task, the to-be-executed task segment; and in response to completion of execution of the to-be-executed task segment, sending by, the processing core for executing the task, a synchronization request signal, wherein the synchronization request signal is configured to trigger generation of the synchronization signal. With the above method, the master processing core in the chip allocates the task segments to be executed by the processing cores according to the synchronization signal, solving the technical problems of inflexible task allocation and complicated control of the processing cores in the prior art.

The above description is only an overview of the technical solutions of the present disclosure. For a clearer understanding of the technical means of the present disclosure for implementation according to the content of the specification, and to make the above and other objectives, features, and advantages of the present disclosure clearer and more comprehensible, detailed description is provided as follows with reference to preferred embodiments and the accompanying drawings.

### BRIEF DESCRIPTION OF DRAWINGS

With the accompanying drawings and with reference to the following detailed description, the above and other features, advantages, and aspects of various embodiments of the present disclosure will become more clear. Throughout the accompanying drawings, the same or similar reference numerals represent the same or similar elements. It should be understood that the accompanying drawings are schematic and that the originals and elements are not necessarily drawn to scale.
FIG. 1a-1b are schematic diagrams of background technology of the present disclosure;
FIG. 2a and FIG. 2b are schematic flowcharts of an embodiment of a task allocation method provided by the present disclosure;
FIG. 3 is a schematic structural diagram of a chip provided by the present disclosure;
FIG. 4 is a schematic structural diagram of an embodiment of a chip provided by the present disclosure;
FIG. 5 is a schematic diagram of a neural network computing task executed by an embodiment of a chip provided by the present disclosure;
FIG. 6 is a schematic diagram of pipelined computation process of processing cores when an embodiment of a chip provided by the present disclosure executes a task allocation method;
FIG. 7 is a timing diagram of processing cores when an embodiment of a chip provided by the present disclosure executes a task allocation method.

### DETAILED DESCRIPTION

Embodiments of the present disclosure will be described in greater detail below with reference to the accompanying drawings. While some embodiments of the present disclosure are shown in the accompanying drawings, it should be understood that the present disclosure may be implemented in various forms and should not be construed as being limited to the embodiments set forth herein, instead these embodiments are provided for a more thorough and complete understanding of the present disclosure. It should be understood that the accompanying drawings and embodiments of the present disclosure are for exemplary purposes only and are not intended to limit the scope of protection of the present disclosure.

It should be understood that the individual steps documented in the method embodiments of the present disclosure may be performed in a different order, and/or in parallel. In addition, the method embodiments may include additional steps and/or omit the steps illustrated. The scope of the present disclosure is not limited in this regard.

The term "include" and its variations are used herein as an open inclusion, that is, "including, but not limited to". The term "based on" means "based, at least in part, on". The term "an embodiment" means "at least one embodiment". The term "another embodiment" means "at least one additional embodiment". The term "some embodiments" means "at least some embodiments". Relevant definitions of other terms will be given in the descriptions below.

It should be noted that the concepts such as "first" and "second" mentioned in the present disclosure are used only to distinguish between different apparatuses, modules or units, and are not intended to define the order or mutual interdependence of the functions performed by these apparatuses, modules or units.

It should be noted that the modifications of "one", "a" and "plurality of" referred to in the present disclosure are illustrative rather than limiting, and it should be understood by those skilled in the art to mean "one or more" unless the context clearly indicates otherwise.

The names of messages or information exchanged between the plurality of apparatuses in the embodiments of the present disclosure are used for illustrative purposes only and are not intended to limit the scope of the messages or information.

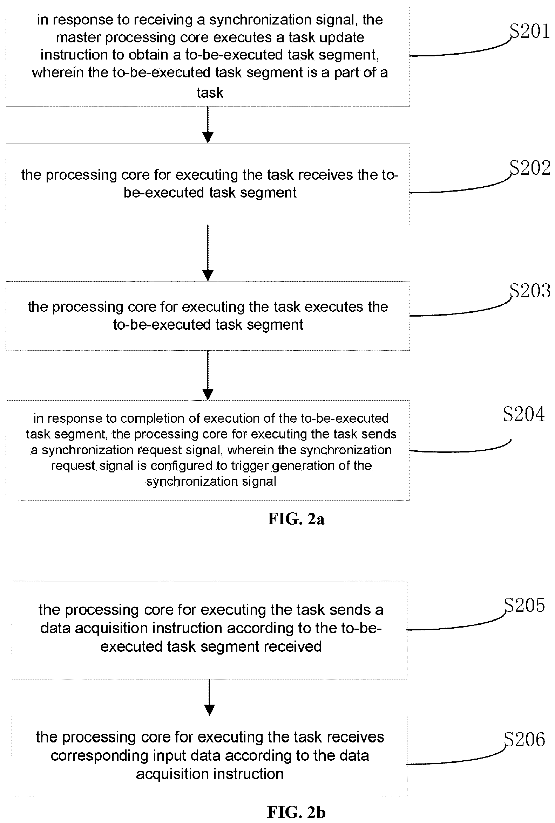

FIG. 2a is a schematic flowchart of an embodiment of a task allocation method provided by the present disclosure. The embodiment provides a task allocation method, for use in a chip, the chip including a master processing core and at least one slave processing core. As shown in FIG. 2a, the method includes the following steps:
Step S201, in response to receiving a synchronization signal, the master processing core executes a task update instruction to obtain a to-be-executed task segment, wherein the to-be-executed task segment is a part of a task.

In embodiments of the present disclosure, during the operation of the chip, a certain processing core is pre-designated as a master processing core MC (Master Core), and other processing cores are slave processing cores SC (Slave Core). The master processing core, in addition to executing the task segment that needs to be executed by itself, is also used to execute a task update program to allocate task segments to the processing cores of the chip. The task update program may use a dynamic allocation rule, in which the task segments are dynamically allocated by the master processing core to one or more processing cores for executing the task according to the actual situation; the task update program may also use a preset fixed allocation rule, in which, how to allocate the task segments and which processing cores to be allocated to are predetermined.

The task segment is a part of a complete task. Correspondingly, according to the different task update programs run by the abovementioned master processing core, the complete task may be dynamically divided or pre-divided into multiple task segments to facilitate the processing cores for executing the task to store and execute. When the synchronization signal is received, the master processing core executes the task update instruction pre-stored in the master processing core according to the received synchronization signal, so as to determine each of the processing cores for executing the task and the to-be-executed task segment to be executed by each of the processing cores. The processing cores for executing the task include one or more of the master processing core and the at least one slave processing core.

Optionally, step S201 includes: in response to receiving the synchronization signal, the master processing core uses number of the synchronization signals received as a parameter for executing the task update instruction to generate a task segment acquisition instruction; the master processing core sends the task segment acquisition instruction to acquire the corresponding to-be-executed task segment. In this embodiment, a preloaded allocation strategy is stored in the master processing core. The allocation strategy configures which processing core or cores need to update the task segment it or they execute in a certain synchronization cycle. The master processing core counts the synchronization signals each time the synchronization signal is received, and determines whether to allocate task segments to the processing cores according to the counting result. Exemplarily, in the above optional embodiment, the number of synchronization signals is used as a parameter of the task update instruction. The task update instruction is executed to obtain the parameters of the task segment acquisition instruction, and the parameters of the task segment acquisition instruction are used to configure the task segment acquisition instruction. In the embodiments of the present disclosure, the to-be-executed task segment acquired by the task segment acquisition instruction may be the same or different.

In an embodiment, the master processing core further includes a synchronization counter or the task update program in the master processing core includes a synchronization counter, and after receiving the synchronization signal, the method further includes: the master processing core starts the synchronization counter to record the number of the synchronization signals received by the master processing core. The master processing core may determine the processing cores for executing the task and the to-be-executed task segments, according to the number of the synchronization signals.

Optionally, the master processing core executes the task update instruction to instruct the memory controller to read the to-be-executed task segment from the external memory and send it to the corresponding processing core.

In most of the time, the master processing core executes its own task segment. The master processing core stores a task update program, and the task update program includes a task update instruction. When the synchronization signal is received, the master processing core executes the task update instruction in the task update program to generate a task segment acquisition instruction. The task update instruction may be, for example, a general update instruction. During execution, the master processing core acquires parameters of the instruction, such as the processing cores for executing the task, the to-be-executed task segments, and the storage locations of the to-be-executed task segments in the external memory, etc., as indicated by the task update instruction.

Exemplarily, the memory controller is a Memory Management Engine (MME), and the memory management engine may be, for example, a DMAC (Direct Memory Access Controller), or other hardware or software capable of implementing memory management functions.

The master processing core executes the task update instruction, and generates the task segment acquisition instruction that can be executed by the MME. The MME receives the task segment acquisition instruction, decodes and executes it to acquire the corresponding to-be-executed task segment from the external memory and send the to-be-executed task segment to the corresponding processing core. The process of acquiring the corresponding to-be-executed task segment from the external memory and sending it to the corresponding processing core does not require the master processing core to participate.

Exemplarily, each time the synchronization signal is received, the master processing core executes the task update instruction and determines the processing cores for executing the task according to the number of synchronization signals, i.e., the processing cores for which task segments need to be updated; and determines parameters such as the to-be-executed task segments, the storage locations of the to-be-executed task segments, and uses these parameters to configure the task segment acquisition instruction.

Optionally, the complete task may be pre-divided into a plurality of task segments, that is, the size of each task segment and the starting address of each task segment are preset. When executing the task segment acquisition instruction, the MME may acquire the to-be-executed task segment from the external memory according to the size and the starting address of the task segment.

Optionally, the complete task may be dynamically divided into a plurality of task segments, that is, the number and sizes of the task segments are not determined before allocation. In this case, the master processing core instructs the MME to read the to-be-executed task segment from the external memory and send it to the processing core for executing the task, including: the master processing core acquires the size of the storage space of the processing core for executing the task; the master processing core instructs the MME to read the task segment that matches the size of the storage space of the processing core for executing the task from the memory and send it to the processing core. Each processing core has its own storage space, and the available size of the storage space may be different. Therefore, when the master processing core instructs to allocate task segments to the processing cores, the master processing core first obtains the size of the storage space of the processing core for executing the task, and determines the size of the task segment using the size of the storage space. Then, the range of the task segment in the entire task for sending to the processing core is determined by the starting address of the task segment and the size of the task segment.

Exemplarily, a storage location is set in the storage space of the slave processing core to store the remaining storage space of the current slave processing core, and the master processing core obtains the remaining storage space of the slave processing core from the location before executing the task update instruction. Alternatively, the master processing core can set a storage location in its own storage space to store the remaining storage space of each slave processing core. As the initial storage space of each slave processing core is known, and the allocation of task segments is determined by the master processing core, the master processing core can calculate the remaining storage space of each slave processing core according to the allocation of task segments. After the current task segment is determined, the starting address of the next task segment is also determined, which is used for the allocation of the next task segment.

Optionally, the dynamic allocation may be dynamic allocation each time, that is, the sizes of the storage spaces of the processing cores for executing the task are obtained each time the task segment allocation instruction is executed. Alternatively, the dynamic allocation may be dynamic allocation of the first time only, that is, the sizes of the storage spaces of the processing cores are considered to be fixed when the task is executed. At the first allocation of task segments, the complete task is divided into a plurality of task segments according to the sizes of the storage spaces of the processing cores and the size of the complete task, and each time thereafter, the processing cores are allocated with task segments according to the sizes of the divided task segments in the first time.

Step S202, the processing core for executing the task receives the to-be-executed task segment.

In this step, the processing core for executing the task include one or more of the master processing core and the at least one slave processing core. In this step, the processing core for executing the task receives the to-be-executed task segment sent by the memory controller.

Exemplarily, the memory controller is connected to all processing cores in the chip through a network on chip (Noc), and in this step, the processing cores for executing the task receive the respective to-be-executed task segments through the network on chip.

Optionally, in an embodiment, the master processing core is one of the processing cores for executing the task, then in this step, the processing core for executing the task receives the to-be-executed task segment, including: the master processing core starts to receive the to-be-executed task segment after executing the task update instruction; and the other processing cores for executing the task directly enter the state of receiving the to-be-executed task segments after receiving the synchronization signal, waiting for the MME to send the to-be-executed task segments to the processing cores for executing the task.

Optionally, in another embodiment, the master processing core is not one of the processing cores for executing the task, then in this step, the processing core for executing the task receives the to-be-executed task segment, including: the processing cores for executing the task enter the state of receiving the to-be-executed task segments after receiving the synchronization signal, waiting for the MME to send the to-be-executed task segments to the processing cores for executing the task.

Step S203, the processing core for executing the task executes the to-be-executed task segment.

After receiving the to-be-executed task segment, the processing core for executing the task executes the to-be-executed task segment to generate output data. Exemplarily, the output data is a part of the output result of the complete task, and the output data generated by each of the to-be-executed task segments executed in multiple synchronization cycles is processed to form the output result of the complete task.

Step S204, in response to completion of execution of the to-be-executed task segment, the processing core for executing the task sends a synchronization request signal, wherein the synchronization request signal is configured to trigger generation of the synchronization signal.

When executing the to-be-executed task segment, each of the processing cores for executing the task sends a synchronization request signal respectively after the completion of the execution of the to-be-executed task segment, wherein the synchronization request signal is for triggering the generation of the synchronization signal.

It can be understood that the synchronization signal may be generated by a synchronization signal generation unit in the chip. In this case, the synchronization signal generation unit is a specific component, which triggers the generation of a first synchronization signal at startup, and then triggers the generation of the synchronization signal after receiving the synchronization request signals sent by all the processing cores.

Optionally, the synchronization signal generation unit may be a program unit. In this case, the generation of synchronization signal is controlled by the program unit. A program is required to generate the first synchronization signal after startup, and then to trigger the generation of the synchronization signal after receiving the message packets of the synchronization request signals sent by all the processing cores.

After step S204, when the master processing core receives the synchronization signal, it calls the task update instruction, and adds the parameters of the next task segment, including the processing core for executing the task, the address or size of the task segment, etc., into the task segment acquisition instruction. The task segment acquisition instruction is used to instruct the sending of the next to-be-executed task segment to the processing core for executing the task indicated by the parameters.

As shown in FIG. 2b, in an embodiment, the task allocation method further includes:
Step S205, the processing core for executing the task sends a data acquisition instruction according to the to-be-executed task segment received;
Step S206, the processing core for executing the task receives corresponding input data according to the data acquisition instruction.

It can be understood that the above steps S205 and S206 are executed after step S202 and before step S203, that is, the processing core for executing the task, before executing the to-be-executed task segment, first obtains the input data corresponding to the to-be-executed task segment.

Similarly, the input data is obtained by sending the data acquisition instruction to the memory manager. After receiving the data acquisition instruction, the memory manager decodes and executes the data acquisition instruction to acquire the corresponding input data, and sends it to the corresponding processing core.

Optionally, step S206 includes: using an identification of the processing core for executing the task as a parameter of the data acquisition instruction to acquire respective input data of the master processing core and the slave processing core. Exemplarily, in steps S205 and S206, each of the processing cores for executing the task configures the data acquisition instruction with their respective identification as the parameter of the data acquisition instruction, and then sends the data acquisition instruction with the configured parameter to the memory manager, to acquire the data corresponding to the identification of each of the processing cores for executing the task from the external memory and send the data to the processing core corresponding to the identification as input data of the processing core in execution of the task segment.

It can be understood that, according to different application scenarios, the input data of different processing cores may be the same or different. Exemplarily, in order to speed up the computation, multiple processing cores execute the same task segment in parallel to quickly obtain the output data of the task segment. In this case, the input data of each processing core is different to obtain a better effect of parallel computing. Exemplarily, in another scenario, multiple processing cores execute different task segments respectively. In this case, the same input data may need to be processed by multiple task segments, and then the input data obtained by the multiple processing cores is the same.

In this embodiment, when the master processing core receives the first synchronization signal, which does not need to be triggered by the synchronization request signal, the master processing core calls and executes the task update instruction. The task update instruction may divide different tasks into different numbers of segments and assign the segments to different processing cores for parallel processing. Exemplarily, there are two processing cores that execute the task in the chip, one is a master processing core and the other is a slave processing core; the task update instruction may divide the complete task into two task segments, and each task segment is handed over to both the master processing core and the slave processing core at the same time, to be executed by the master processing core and the slave processing core, respectively.

In this optional embodiment, the synchronization request signal includes the synchronization request signals generated by at least two processing cores executing the task. That is, when there are multiple processing cores, each processing core sends its own synchronization request signal.

Further, the synchronization request signal is configured to trigger the generation of the synchronization signal, including: in response to the synchronization request signals being sent by all processing cores for executing the task, the generation of the synchronization signal is triggered. In this embodiment, the synchronization signal is generated only after each processing core for executing the task sends the synchronization request signal.

The above embodiment provides a task allocation method, for use in a chip, the chip including a master processing core and at least one slave processing core, the task allocation method including: in response to receiving a synchronization signal, executing, by the master processing core, a task update instruction to obtain a to-be-executed task segment, wherein the to-be-executed task segment is a part of a task; receiving, by a processing core for executing the task, the to-be-executed task segment, wherein the processing core for executing the task includes the master processing core and/or the slave processing core; executing, by the processing core for executing the task, the to-be-executed task segment; and in response to completion of execution of the to-be-executed task segment, sending, by the processing core for executing the task, a synchronization request signal, wherein the synchronization request signal is configured to trigger generation of the synchronization signal. In the above method, the master processing core in the chip allocates the task segments to be executed by the processing cores according to the synchronization signal, which solves the technical problems of inflexible task allocation and complicated control of the processing cores in the prior art.

In the above paragraphs, although the steps in the abovementioned method embodiments are described in the abovementioned order, it should be clear to those skilled in the art that the steps in the embodiments of the present disclosure are not necessarily executed in the abovementioned order, and may also be performed in other order, such as in reverse order, in parallel, interleavedly or the like; and on the basis of the abovementioned steps, those skilled in the art may also add other steps. These obvious modifications or equivalent replacement modes should also be included within the protection scope of the present disclosure, and will not be repeated here.

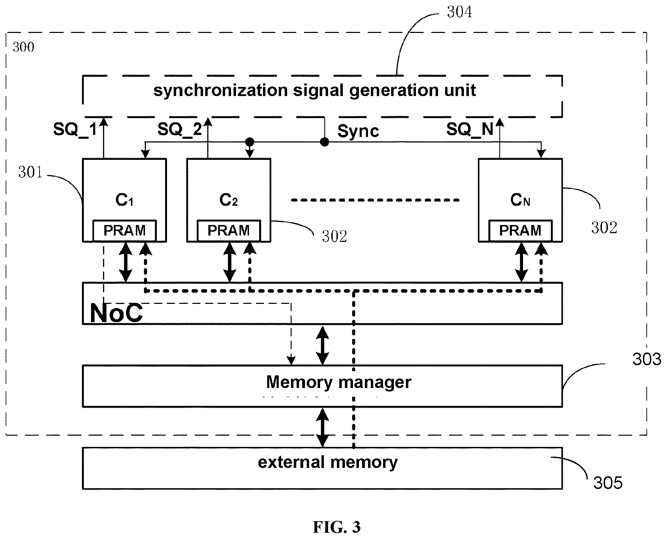

FIG. 3 is a schematic structural diagram of a chip provided by the present disclosure. As shown in Fig. 3, the chip 300 includes: a master processing core 301, at least one slave processing core 302 and a memory manager 303. The master processing core is configured to, in response to receiving a synchronization signal, execute a task update instruction to obtain a to-be-executed task segment, and the to-be-executed task segment is a part of a task; the memory manager is configured to, based on the task update instruction, read the to-be-executed task segment indicated by the task update instruction from an external memory, and send the to-be-executed task segment to a processing core for executing the task; wherein the processing core for executing the task includes the master processing core and/or the slave processing core; the processing core for executing the task is configured to receive the to-be-executed task segment; the processing core for executing the task is configured to execute the to-be-executed task segment; and in response to completion of execution of the to-be-executed task segment, the processing core for executing the task is configured to send a synchronization request signal, wherein the synchronization request signal is configured to trigger generation of the synchronization signal. The master processing core further includes an internal storage space PRAM for storing a task update program and the task segment; the slave processing core also includes an internal storage space PRAM for storing the task segment.

The chip 300 may further include a synchronization signal generation unit 304. The synchronization signal generation unit 304 is connected to the multiple processing cores, and is configured to generate a synchronization signal Sync; and the synchronization signal is sent to each of the multiple processing cores.

Optionally, the synchronization signal generation unit is a specific hardware component, which generates a first synchronization signal at startup, and then triggers the generation of the synchronization signal after receiving the synchronization request signals sent by all the processing cores for executing the task.

Optionally, the synchronization signal generation unit is a program unit. In this case, the generation of synchronization signal is controlled by the program unit. A program is required to generate the first synchronization signal after startup, and then to trigger the generation of the synchronization signal after receiving the message packets of synchronization signal request signals sent by all the processing cores for executing the task.

In some embodiments, the synchronization signal generation unit may be only connected to the master processing core, and the synchronization of the slave processing cores may be achieved by the master processing core instructing the MME, details of which will not be elaborated.

The following description and illustration are made with reference to the implementation shown FIG. 3. The process of generating the synchronization signal in this embodiment is the same as that in the method embodiment, details of which will not be repeated. In this embodiment, all processing cores are processing cores for the executing the task.

As shown in FIG. 3, when a first preset condition is satisfied, each of the processing cores for executing the task sends the synchronization request signals SQ_1, SQ_2,... SQ_N, respectively; when the synchronization signal generation unit receives the synchronization request signals sent by all the processing cores for executing the task, the synchronization signal Sync is generated; and the synchronization signal is simultaneously sent to each of the processing cores for executing the task by the synchronization signal generation unit.

Further, the master processing core is further configured to execute the task update instruction to send a task segment acquisition instruction to the memory manager; the memory manager is configured to execute the task segment acquisition instruction to read the to-be-executed task segments from the external memory and send the to-be-executed task segments to the processing cores for executing the task.

Further, the processing cores for executing the task are configured to send data acquisition instructions according to the received to-be-executed task segments; and to receive respective input data according to the data acquisition instructions.

Further, the processing cores for executing the task are configured to use identifications of the processing cores for executing the task as parameters of the data acquisition instructions, to obtain input data of each of the processing cores for executing the task.

Further, the synchronization request signal is configured to trigger the generation of the synchronization signal, including:
in response to the synchronization request signals being sent by all processing cores for executing the task, the generation of the synchronization signal is triggered.

Further, the master processing core is configured to, in response to receiving the synchronization signal, use the number of the synchronization signals received as a parameter for executing the task update instruction to generate the task segment acquisition instruction;

Further, after receiving the synchronization signal, the master processing core is configured to start a synchronization counter to record the number of the synchronization signals received by the master processing core.

As shown in FIG. 3, optionally, the processing cores for executing the task in each synchronization cycle and the corresponding task segments to be executed are allocated by the system in advance; and the allocation parameters of the task update program are also generated, and the allocation parameters corresponding to all synchronization cycles form the fixed allocation rule. The master processing core 301 executes the task update program to allocate corresponding task segments to the processing cores for executing the task; exemplarily, the allocation parameters of the task update program are allocation parameters generated by off-chip pre-compilation, which determine the processing cores for executing the task in each clock cycle and the to-be-executed task segment corresponding to each of the processing cores for executing the task. The master processing core, as the execution unit of the task update program, executes the task update instruction in the task update program to allocate the to-be-executed task segment to each of the processing cores for executing the task. In this case, the master processing core is an execution unit, and it only needs to allocate the to-be-executed task segments to the processing cores for executing the task in each synchronization cycle according to the pre-configured settings.

Optionally, the processing cores for executing the task and the corresponding to-be-executed task segments in each synchronization cycle may also be dynamically determined by the task update program. In this case, the master processing core 301 dynamically obtains the allocation parameters. Exemplarily, the dynamic allocation rule is to determine, according to the specific state of each processing core in each cycle such as the size of the remaining storage space and the like, the processing cores for executing the task in each cycle and the sizes and/or the storage addresses of the corresponding to-be-executed task segments. In this case, the master processing core is a computing unit, which needs to compute, according to the preset dynamic allocation rule and the status of each processing core in the current synchronization cycle, to obtain the processing cores for executing the task and the sizes and/or the storage addresses of the corresponding to-be-executed task segments in the current synchronization cycle.

In the case of system pre-allocation, the allocation parameters are set in an external memory or in other hosts; and during the initialization of the chip, the main processing core reads the allocation parameters from the external memory or other hosts. The allocation parameters of a complete task include the processing cores for executing the task used in each synchronization cycle of the complete task and the to-be-executed task segments to be executed by the processing cores for executing the task. In the first synchronization cycle, the master processing core receives the synchronization signal and executes the task update instruction. The allocation parameters of the first synchronization cycle are written into the task segment acquisition instruction, which include the processing cores for executing the task, the task segments to be allocated and the storage addresses of the task segments to be allocated in the first synchronization cycle. The master processing core sends the task segment acquisition instruction to the MME, so that when the MME executes the task segment acquisition instruction, the MME reads the corresponding task segments from the external memory 305 and sent them to the corresponding processing cores for executing the task.

The processing core includes an internal storage space PRAM for storing the task segment; the task segment consists of a series of instructions. The processing core reads the instructions from the PRAM, decodes and executes the instructions, and no longer needs to read instructions from the external memory. The PRAM of each processing core has a limited storage space, so a complete task needs to be divided into a plurality of task segments for execution. When the processing core finishes the execution of the task segment, it executes a synchronization request signal sending instruction to send the synchronization request signal to the synchronization signal generation unit.

After receiving the synchronization request signal from every processing core for executing the task, the synchronization signal generation unit generates a new synchronization signal and sends it to each processing core that sent the synchronization request signal. After the master processing core receives the synchronization signal, it determines the number of the synchronization signals received, and executes the task update instruction. The allocation parameters are determined according to the number of synchronization signals, and the allocation parameters determine the processing cores for executing the task and the to-be-executed task segments, and the allocation parameters are written into the task segment acquisition instruction so that the memory controller executes the task segment acquisition instruction to fetch the corresponding task segments from the external memory and sent them to the corresponding processing cores. In other times when the task update instruction is not executed, the master processing core may execute its own task segment without being idle like a dedicated scheduler, which improves the execution efficiency of the master processing core.

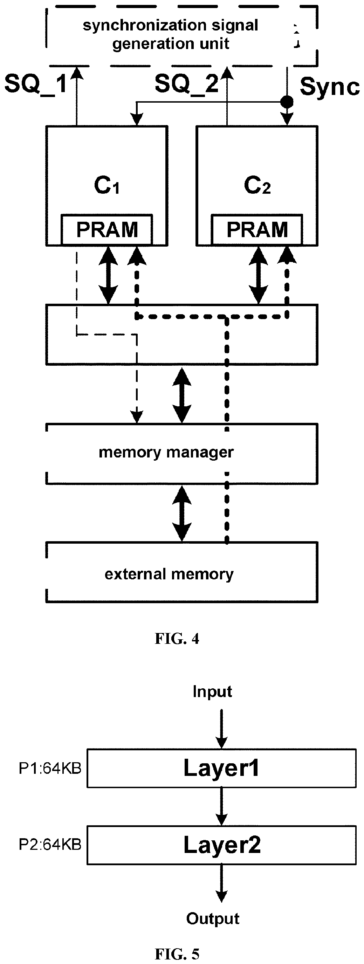

The following illustrates the task allocation process in the present disclosure with a practical application scenario. FIG. 4 illustrates an example of the chip according to an embodiment of the present disclosure. In the example, the chip includes two processing cores C1 and C2, in which the master processing core is C1 and the slave processing core is C2, and a memory manager, wherein the memory manager is connected to an external memory. The chip may further include a synchronization signal generation unit. It should be understood that the synchronization signal generation unit may be implemented as hardware inside the chip or as a synchronization signal generation program, which will not be elaborated here. Exemplarily, the sizes of the PRAMs of the processing cores C1 and C2 are both 36KB. C1 is the master processing core with a task update program of 4KB in its PRAM. The task update program is a resident program that does not change during task execution, and may be updated by initializing the master processing core when a new task is executed. The remaining 32KB is used to store other programs, that is, the to-be-executed task segment. In this example, the C1 and C2 execute the same task segment.

In an embodiment, the task is a computing task for a two-layer neural network. As shown in FIG. 5, the neural network in the example includes two layers, layer1 and layer2, where layer1 receives input data and computes, and it inputs the computation result to layer2; and layer2 performs computation on the data input from layer1 to obtain the final output. The size of the computation program P1 of the first layer is 64KB, and the size of the computation program P2 of the second layer is also 64KB; and the entire network may be allocated to the two processing cores for pipelined parallel computation according to the task allocation strategy, that is, each layer is divided into two task segments for execution, C1 and C2 are both responsible for the execution of the two task segments of each layer of the network, and each obtains the input data and executes the corresponding task segment. In the first clock cycle, C1 receives a first segment of input data for the first layer, and C1 processes the first segment of input data for the first layer according to the first task segment of the first layer; C2 receives a second segment of input data for the first layer, and C2 processes the second segment of input data for the first layer according to the first task segment of the first layer. In the second clock cycle, C1 takes the output data of C1 in the first cycle as the input data in the second clock cycle, and processes it according to the second task segment of the first layer; similarly, C2 takes the output data of C2 in the first cycle as the input data in the second clock cycle, and processes it according to the second task segment of the first layer. Similarly, in the third and fourth clock cycles, C1 and C2 respectively take the output data of the previous clock cycle as the input data of current clock cycle, and process it according to the first task segment and the second task segment of the second layer. Finally, the outputs of the two processing cores in the fourth clock cycle are merged into the final output result.

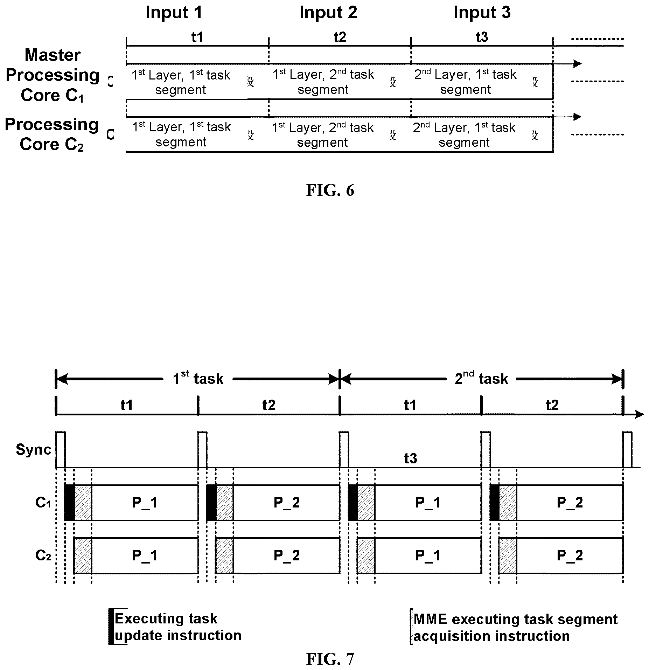

The pipelined computation process is shown in FIG. 6. At time t1, C1 receives the first segment of input data for the first layer, performs processing on the input data according to the first task segment of the first layer, and caches the processing result. At time 11, C2 receives the second segment of input data for the first layer, performs processing on the input data according to the first task segment of the first layer, and caches the processing result. At time t2, C1 and C2 update the computation program to the second task segment of the first layer, and process the input data to obtain processing result according to the second task segment of the first layer, and the processing results obtained at t1 and t2 are combined into the output result of the first layer. The above process is continued, and in the next two clock cycles, the computation program is updated to the task segments of the second layer, and the output result of the first layer is taken as the input data for the second layer to obtain the output result of the second layer; finally, the output results of the second layer are integrated to obtain the complete output result.

FIG. 7 is a timing diagram of task allocation and execution of the processing cores. In this example, a task is divided into two task segments P_1 and P_2 for execution. As shown in FIG. 7, initially, the synchronization signal generation unit generates the first synchronization signal. The master processing core C1 executes the task update instruction in the resident task update program, and starts the counter to prepare for the counting of the synchronization signal Sync. The master processing core generates the task segment acquisition instruction according to the number of Syncs and the allocation parameters corresponding to the number; the task segment acquisition instruction includes the parameters such as the processing cores C1 and C2 for executing the task, the task segment P_1 to be executed by C1 and C2 and the storage address of the task segment P_1. The master processing core sends the task segment acquisition instruction to the MME. The MME decodes and executes the task segment acquisition instruction, and reads the first task segment P_1 for C1 and C2 from the external memory and writes it into the PRAMs of C1 and C2. That is, in cycle t1 in FIG. 7, after receiving the signal Sync, C1 executes the task segment update program, and then the MME obtains the to-be-executed task segment P_1 from the external memory according to the task segment acquisition instruction and send the to-be-executed task segment P_1 to C1 and C2. In the remaining time of the synchronization cycle, C1 and C2 obtain their corresponding input data and execute the first task segment until the execution is completed. C1 sends a synchronization signal request SQ_1 to the synchronization signal generation unit after completing the execution of the first task segment; C2 sends a synchronization signal request SQ_2 to the synchronization signal generation unit after completing the execution of the first task segment. The synchronization signal generation unit generates a new synchronization signal Sync after receiving the SQ_1 and SQ_2. Thereafter, C1 continues the above process according to the new synchronization signal Sync, so that C1 and C2 execute the second task segment P_2; and so on until the complete task is executed in parallel by C1 and C2. Afterwards, C1 and C2 may proceed to the next task (2nd task) according to the task update instruction.

In the solution illustrated by the above embodiment, all the processing cores execute a task segment in parallel to speed up the execution of the task segment. It can be understood that in practical applications, it is possible that only one processing core is allocated a task segment in the first synchronization cycle. For example, C2 needs to wait for the execution result of the first task segment of C1 to be used as the input data of the first task segment of C2. In this case, C2 may perform other tasks or wait idle in the first synchronization cycle. More generally, when a processing core needs to wait for the output result of another processing core as its input, it may perform other tasks or wait idle before obtaining the output result of the other processing core, and this is related to the preset allocation strategy.

The embodiments of the present disclosure provide an electronic device, including: a memory for storing computer-readable instructions; and one or more processors for executing the computer-readable instructions, which, upon execution, cause the processors to implement any one of the task allocation methods in the embodiments.

The embodiments of the present disclosure further provide a non-transitory computer-readable storage medium, the non-transitory computer-readable storage medium storing computer instructions for causing a computer to execute any one of the task allocation methods in the above embodiments.

The embodiments of the present disclosure further provide a computer program product, including computer instructions, wherein, when the computer instructions are executed by a computing device, the computing device executes any one of the task allocation methods in the above embodiments.

The embodiments of the present disclosure further provide a computing apparatus, including one or more chips in the above embodiments.

The flowcharts and block diagrams in the accompanying drawings of the present disclosure show the possible architecture, functions, and operations of a system, the method, and a computer program product according to various embodiments of the present disclosure. In this regard, each block in the flowcharts or block diagrams may represent a module, a task segment or a part of codes, and the module, the task segment or the part of the codes contains one or more executable instructions for implementing the defined logical functions. It should also be noted that in some implementations as alternatives, the functions labeled in the blocks may occur in an order different from the order labeled in the accompanying drawings. For example, two sequentially shown blocks may be substantially executed in parallel in fact, and they sometimes may also be executed in a reverse order, depending on related functions. It should also be noted that each block in the block diagrams and/or the flowcharts and the combination of the blocks in the block diagrams and/or the flowcharts may be implemented by a dedicated system based on hardware for executing defined functions or operations, or may be implemented by a combination of the dedicated hardware and computer instructions.

The units described in the embodiments of the present disclosure may be implemented in a software fashion or may be implemented in a hardware fashion. The names of the units do not constitute a limitation to the units in some cases.

The functions described above herein may be performed, at least in part, by one or more hardware logic components. For example, non-restrictively, exemplary types of hardware logic components that can be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program for use by or in conjunction with an instruction execution system, apparatus or device. The machine-readable medium may be a machine-readable signal medium or a machine-readable storage medium. The machine-readable medium may include, but not limited to, an electronic, magnetic, optical, electromagnetic, infrared or semiconductor system, apparatus or device, or any suitable combination of the foregoing. A more specific example of the machine-readable storage medium includes an electrical connection based on one or more wires, a portable computer disk, a hard disk, a random-access memory (RAM), a read-only memory (ROM), an erasable programmable read-only memory (an EPROM or a flash memory), an optical fiber, a portable compact disk read-only memory (CD-ROM), an optical storage device, a magnetic storage device, or any suitable combination of the above content.

## Claims

1. A task allocation method, for use in a chip, the chip comprising a master processing core and at least one slave processing core, wherein the method comprises:
in response to receiving a synchronization signal, executing, by the master processing core, a task update instruction to obtain a to-be-executed task segment, wherein the to-be-executed task segment is a part of a task;
receiving, by a processing core for executing the task, the to-be-executed task segment, wherein the processing core for executing the task includes the master processing core and/or the slave processing core;
executing, by the processing core for executing the task, the to-be-executed task segment; and
in response to completion of execution of the to-be-executed task segment, sending, by the processing core for executing the task, a synchronization request signal, wherein the synchronization request signal is configured to trigger generation of the synchronization signal.

2. The task allocation method according to claim 1, wherein executing, by the master processing core, the task update instruction to obtain the to-be-executed task segment, comprises:
executing, by the master processing core, the task update instruction to send a task segment acquisition instruction to a memory manager; and
executing, by the memory manager, the task segment acquisition instruction to read the to-be-executed task segment from an external memory and send the to-be-executed task segment to the master processing core and the slave processing core.

3. The task allocation method according to claim 1 or 2, further comprising:
sending, by the processing core for executing the task, a data acquisition instruction according to the to-be-executed task segment received; and
receiving, by the processing core for executing the task, corresponding input data according to the data acquisition instruction.

4. The task allocation method according to claim 3, wherein receiving, by the processing core for executing the task, the corresponding input data according to the data acquisition instruction, comprises:
using an identification of the processing core for executing the task as a parameter of the data acquisition instruction to obtain the input data of the processing core for executing the task.

5. The task allocation method according to any one of claims 1 to 4, wherein the synchronization request signal being configured to trigger the generation of the synchronization signal, comprises:
in response to the synchronization request signals being sent by all processing cores for executing the task, triggering the generation of the synchronization signal.

6. The task allocation method according to any one of claims 1 to 5, wherein in response to receiving the synchronization signal, executing, by the master processing core, the task update instruction to obtain the to-be-executed task segment, comprises:
in response to receiving the synchronization signal, using, by the master processing core, number of the synchronization signals received as a parameter for executing the task update instruction to generate a task segment acquisition instruction; and
sending, by the master processing core, the task segment acquisition instruction to acquire the corresponding to-be-executed task segment.

7. The task allocation method according to any one of claims 1 to 6, wherein, after receiving the synchronization signal, the method further comprises:
starting, by the master processing core, a synchronization counter to record number of the synchronization signals received by the master processing core.

8. A chip, comprising:
a master processing core, at least one slave processing core, and a memory manager;
wherein, the master processing core is configured to, in response to a received synchronization signal, execute a task update instruction to obtain a to-be-executed task segment, and the to-be-executed task segment is a part of a task;
the memory manager is configured to, based on the task update instruction, read the to-be-executed task segment corresponding to the task update instruction from an external memory and send the to-be-executed task segment to a processing core for the executing the task;
wherein the processing core for executing the task includes the master processing core and/or the slave processing core;
the processing core for executing the task is configured to receive the to-be-executed task segment;
the processing core for executing the task is configured to execute the to-be-executed task segment; and
in response to completion of execution of the to-be-executed task segment, the processing core for executing the task is configured to send a synchronization request signal, wherein the synchronization request signal is configured to trigger generation of the synchronization signal.

9. The chip according to claim 8, wherein the chip further comprises:
a network on chip, connected to the master processing core, the slave processing core and the memory manager, and configured to transfer data among the master processing core, the slave processing core and the memory manager.

10. A computing apparatus, comprising one or more chips according to claim 8 or 9.

11. An electronic device, comprising: a memory for storing computer-readable instructions; and one or more processors for executing the computer-readable instructions, which, upon execution, cause the processors to implement the task allocation method according to any one of claims 1-7.

12. A non-transitory computer-readable storage medium, the non-transitory computer-readable storage medium storing computer instructions for causing a computer to execute the task allocation method according to any one of claims 1-7.

13. A computer program product, comprising computer instructions, wherein, when the computer instructions are executed by a computing device, the computing device executes the task allocation method according to any one of claims 1-7.
